# EUROPÄISCHE PATENTSCHRIFT

(11) **EP 3 948 036 B1**
(45) Veröffentlichungstag und Bekanntmachung des Hinweises auf die Patenterteilung: **26.04.2023**
(21) Anmeldenummer: 19714398.5
(22) Anmeldetag: 27.03.2019
(51) Int. Cl.: F16K 31/10, F16K 11/065, F16K 31/00, F16K 31/06

(54) **WEGEVENTIL FÜR EINEN WÄRMEPUMPENKREISLAUF**
DIRECTIONAL CONTROL VALVE FOR A HEAT PUMP CIRCUIT
VANNE À VOIES MULTIPLES POUR UN CIRCUIT DE POMPE À CHALEUR

(43) Veröffentlichungstag der Anmeldung: 09.02.2022
(73) Patentinhaber: Pierburg GmbH, 41460 Neuss (DE)
(72) Erfinder: GERARDS, Hans, 41460 Neuss (DE)
(74) Vertreter: terpatent Patentanwälte ter Smitten Eberlein-Van Hoof Rütten Daubert
(86) Internationale Anmeldenummer: PCT/EP2019/057726
(87) Internationale Veröffentlichungsnummer: WO 2020/192906

(56) Entgegenhaltungen:
- DE-A1- 2 113 904
- US-A- 142 292
- US-A- 3 637 961
- US-A- 4 597 414
- US-A- 5 573 034
- US-B2- 7 152 416

## Beschreibung

Die Erfindung betrifft ein Wegeventil für einen Wärmepumpenkreislauf mit einem Ventilgehäuse, welches mindestens drei fluidische Anschlüsse aufweist und einen Fluidraum begrenzt, einem Ventilglied, welches in dem Ventilgehäuse verschiebbar gelagert ist und zwischen mindestens zwei Betriebsstellungen verstellbar ist, einem Aktor, über welchen das Ventilglied translatorisch bewegbar ist.

Wegeventile dienen üblicherweise dazu, den Weg für ein Arbeitsmedium freizugeben, zu sperren oder die Durchflussrichtung zu ändern. Das Wegeventil umfasst üblicherweise zwei, drei, vier oder fünf Anschlüsse und kann zwischen zwei oder drei Betriebsstellung geschaltet werden.

Ein derartiges Wegeventil wird beispielsweise gemäß DE 603 06 487 T2 als Umkehrventil für einen Wärmepumpenkreislauf eines Kraftfahrzeugs verwendet. Der Wärmepumpenkreislauf umfasst üblicherweise einen ersten Wärmetauscher, einen Verdichter, einen zweiten Wärmetauscher und ein Entspannungsventil. Das Umkehrventil ist in Strömungsrichtung des Kältemittels hinter dem Verdichter angeordnet und dient dazu, den Wärmepumpenkreislauf in einem Heiz- oder einem Kühlbetrieb zu betreiben, wobei das Umkehrventil bewirkt, dass das verdichtete Kältemittel ausgehend vom Verdichter entweder zum ersten Wärmetauscher oder zum zweiten Wärmetauscher geleitet wird, sowie dass das verflüssigte Kältemittel in Strömungsrichtung nach den beiden Wärmetauschern zurück zum Verdichter geleitetet wird.

Das in der DE 603 06 487 T2 offenbarte Umkehrventil umfasst ein translatorisch verschiebbares Ventilglied und jeweils eine an den Stirnflächen des Ventilglieds vorgesehene Druckkammer. In Abhängigkeit davon, ob der Wärmepumpenkreislauf im Kühl- oder im Heizbetrieb betrieben werden soll, wird über ein zusätzliches Regelventil der einen oder der anderen Druckkammer ein unter Druck stehendes, verdichtetes Kältemittel zugeführt, wodurch das Ventilglied in eine erste, den Kühlbetrieb bereitstellende oder eine zweite, den Heizbetrieb bereitstellende Stellung verschoben wird.

Nachteilhaft an dem in DE 603 06 487 T2 offenbarten Wegeventil ist, dass zur Betätigung des Ventilglieds ein zusätzliches Regelventil erforderlich ist, wodurch das Wegeventil einen aufwendigen Aufbau aufweist. Außerdem erfolgt die Betätigung des Ventilglieds beim Umschalten zwischen den Betriebsstellungen ausschließlich durch den Betriebsdruck des Wärmepumpenkreislaufs, wobei bei einem abfallenden Betriebsdruck das Wegeventil nicht mehr schaltbar ist.

Aus der US 142 292 A ist weiterhin ein Ventil bekannt, welches ein translatorisch verschiebbares Ventilglied und einen mit dem Ventilglied wirkverbundenes, kippbares Betätigungsglied aufweist.

Es stellt sich daher die Aufgabe, ein Wegeventil zu schaffen, welches einfach und kostengünstig aufgebaut ist und unabhängig vom Betriebsdruck des zu regelnden Kreislaufs schaltbar ist.

Diese Aufgabe wird durch ein Wegeventil mit den Merkmalen des Hauptanspruchs 1 gelöst.

Dadurch, dass der Aktor über ein kippbares Betätigungsglied mit dem Ventilglied wirkverbunden ist, wobei die Kippachse des Betätigungsglieds senkrecht zur Bewegungsrichtung des Ventilglieds angeordnet ist, wird ein Wegeventil geschaffen, welches direkt und ohne die Abhängigkeit vom Betriebsdruck des zu regelnden Kreislaufs schaltbar ist, wobei alle Betriebsstellungen ohne die Betätigung des Aktors stabil sind. Außerdem weist das Wegeventil lediglich ein einfach und kostengünstig ausgeführtes Betätigungsglied auf, welches kippbar am Ventilgehäuse gelagert ist und mechanisch durch den Aktor zwischen mehreren Betriebsstellungen verstellt werden kann. Auf diese Weise kann das Betätigungsglied zuverlässig in die vordefinierten Betriebsstellungen bewegt werden. Beim Umschalten zwischen den Betriebsstellungen führt das Betätigungsglied grundsätzlich eine Kippbewegung durch. Nichtdestotrotz kann das Betätigungselement beim Umschalten zwischen den Betriebsstellungen auch eine Überlagerung zwischen Kipp- und einer Translationsbewegung durchführen. Dabei kann das Betätigungselement bei der Betätigung verformt werden, wodurch die senkrecht zur Bewegungsrichtung angeordnete Kippachse während der Betätigung verschoben wird.

Das Betätigungsglied ist eine Blattfeder mit einem V-förmigen Querschnitt, wobei die V-förmige Blattfeder zwei Schenkel und einen die beiden Schenkel verbindenden Verbindungsabschnitt aufweist, wobei die Blattfeder über die freien Enden des Schenkels kippbar am Ventilgehäuse gelagert ist und über den Verbindungsabschnitt zumindest in Bewegungsrichtung des Ventilglieds formschlüssig mit dem Ventilglied verbunden ist. Durch die Ausgestaltung des Betätigungsglieds aus einer Blattfeder kann das Betätigungsglied einfach und kostengünstig hergestellt werden, wobei die Blattfeder aus einem Blech ausgestanzt und durch ein einfaches Umformen in ihre endgültige Form gebracht wird. Die Blattfeder ist elastisch verformbar, wobei die Blattfeder in ihren Betriebsstellungen derart elastisch verformt wird, dass die Blattfeder eine Kraft senkrecht zur Bewegungsrichtung des Ventilglieds auf das Ventilglied erzeugt. Dadurch wird die Dichtwirkung zwischen dem Ventilglied und der Oberfläche des Ventilgehäuses, auf dem das Ventilglied während der Verstellbewegung gleitet, erhöht. Außerdem kann die Blattfeder durch ihre elastische Verformbarkeit einfach und zuverlässig in einer an der Innenfläche des Ventilgehäuses hergestellten Nut montiert werden, wobei die Schenkel der Blattfeder in die Nut eingreifen. Die Nut weist vorzugsweise einen schwalbenschwanzartigen Querschnitt auf, wobei die Seitenflächen der Nut ausgehend vom Nutgrund zulaufen.

Vorzugsweise ist das Betätigungsglied druckausgeglichen, wobei das Betätigungsglied im Fluidraum angeordnet ist und vollständig vom Kältemittel umgeben ist. Dadurch kann die zum Verschieben des Betätigungsglieds und des Ventilglieds erforderliche Antriebskraft des Aktors reduziert werden und dadurch ein einfacher und kostengünstiger Aktor mit einer geringen Antriebsleistung eingesetzt werden.

In einer bevorzugten Ausgestaltung ist das Betätigungsglied mit einem ersten Ende kippbar am Ventilgehäuse gelagert und mit einem zweiten Ende mit dem Ventilglied wirkverbunden, wobei das Betätigungsglied über einen zum ersten Ende des Betätigungsglieds beabstandeten Angriffspunkt mit dem Aktor gekoppelt ist. Dadurch, dass das Betätigungsglied mit dem ersten Ende kippbar am Ventilgehäuse gelagert ist und der Angriffspunkt beabstandet vom ersten Ende angeordnet ist, ist eine einfache, durch den Aktor verursachte, translatorische Betätigung am Angriffspunkt ausreichend, um eine Kippbewegung des Betätigungsglieds und damit eine Verstellung des Ventilglieds zu bewirken.

In einer bevorzugten Ausgestaltung weisen die Schenkel der V-förmigen Blattfeder jeweils eine bezogen auf einen durch die V-förmige Blattfeder begrenzten Innenraum nach außen gerichtete Sicke auf, wobei in die Sicken ein mit dem Aktor wirkverbundenes Übertragungsglied eingreift. Das Übertragungsglied ist ein längliches Element, welches zwischen den beiden Schenkeln eingespannt ist und durch die Sicken in der Position relativ zu den beiden Schenkeln gehalten wird. Auf diese Weise kann der Aktor einfach und kostengünstig mit der Blattfeder verbunden werden, wobei die Sicken durch Umformen des Betätigungsglieds einfach und kostengünstig hergestellt werden können.

Vorzugsweise weist das Ventilglied an seiner dem Betätigungsglied zuwandten Oberfläche eine Nut auf, in die der Verbindungsabschnitt des Betätigungsglieds eingreift. Dadurch kann das Betätigungsglied einfach und kostengünstig mit dem Ventilglied verbunden werden.

In einer vorteilhaften Ausgestaltung weist die Nut zwei gegenüberliegende, ausgehend vom Nutgrund aufeinander zulaufende Seitenflächen auf. Vorzugsweise weist das Betätigungsglied eine von der Außenfläche ragenden Zunge auf, welche in die durch die zulaufenden Seitenflächen der Nut hergestellten Hinterschnitt eingreift. Auf diese Weise kann das Betätigungsglied zuverlässig mit dem Ventilglied verbunden werden, so dass eine Verbindung zwischen dem Betätigungsglied und dem Ventilglied über die gesamte Lebensdauer gewährleistet ist. Alternativ kann anstatt einer Zunge jeder andere von der Außenfläche ragende Vorsprung gewählt werden.

Vorzugsweise weist das Ventilglied einen ersten Vorsprung und einen zweiten Vorsprung auf, wobei das Ventilglied in einer der beiden Betriebsstellungen mit dem ersten Vorsprung und in der anderen Betriebsstellung mit dem zweiten Vorsprung am Ventilgehäuse anliegt. Durch die Betätigung des Aktors wird das Ventilglied in eine der beiden Betriebsstellungen verstellt, wobei das Ventilgehäuse als Anschlag für die Vorsprünge dient. In den Betriebsstellungen des Ventilglieds liegt das Ventilglied über den jeweiligen Vorsprung an dem Ventilgehäuse an, wodurch die druckbelastete Fläche des Ventilglieds durch den anliegenden Vorsprung verkleinert wird. Dadurch wirkt eine resultierende Kraft auf das Ventilglied in Richtung der Verschieberichtung und drückt das Ventilglied über den Vorsprung gegen das Ventilgehäuse. Dadurch kann die Schaltstellung gehalten werden, ohne dass der Aktor aktiv ist.

Vorzugsweise ist das Ventilgehäuse mehrteilig aus einem Bodenelement, einem hülsenartigen Mittelelement und einem Deckelelement ausgeführt, wodurch das Wegeventil einfach montiert werden kann.

In einer bevorzugten Ausgestaltung sind vier Anschlüsse vorgesehen, wobei drei Anschlüsse am Bodenelement angeordnet sind und ein Anschluss am Mittelelement angeordnet ist. Dadurch kann das Wegeventil einfach ausgeführt werden, wobei der erste Anschluss dauerhaft mit dem Fluidraum fluidisch verbunden ist und in Abhängigkeit von der Betriebsstellung des Ventilglieds der erste Anschluss über den Fluidraum mit dem zweiten oder dem vierten Anschluss fluidisch verbunden wird. Gleichzeitig ist der dritte Anschluss je nach Betriebsstellung des Ventilglieds mit dem zweiten Anschluss fluidisch verbunden, wenn der erste Anschluss mit dem vierten Anschluss fluidisch verbunden ist, und mit dem vierten Anschluss fluidisch verbunden, wenn der ersten Anschluss mit dem zweiten Anschluss fluidisch verbunden ist.

Vorzugsweise ist der Aktor ein elektromagnetischer Aktor, wodurch auf eine einfache Weise eine translatorische Bewegung des Betätigungsglieds erzeugt werden kann.

In einer bevorzugten Ausgestaltung ist der elektromagnetische Aktor über ein Stangenelement mit dem Übertragungsglied drehbar verbunden, wobei das Stangenelement translatorisch in Bewegungsrichtung des Wegeventils durch den Aktor verschiebbar ist. Das Stangenelement ist fest mit dem elektromagnetischen Aktor verbunden und über ein Drehgelenk verdrehbar mit einem Übertragungsglied verbunden, wobei durch das Drehgelenk eine Verbindung zwischen dem sich translatorisch bewegenden Stangenelement und dem kippenden Betätigungsglied hergestellt werden kann.

Es wird somit ein Wegeventil geschaffen, welches einfach und kostengünstig hergestellt werden kann und unabhängig vom Betriebsdruck des zu regelnden Kreislaufs betätigt werden kann.

Ein Ausführungsbeispiel eines erfindungsgemäßen Wegeventils für einen Wärmepumpenkreislauf ist in den Figuren dargestellt und wird nachfolgend beschrieben.
Figur 1 zeigt eine Ansicht eines erfindungsgemäßen Wegeventils im Längsschnitt.
Figur 2 zeigt eine schematische Ansicht eines Wärmepumpenkreislaufs mit dem erfindungsgemäßen Wegeventil aus Figur 1 im Längsschnitt und in einer ersten Betriebsstellung.
Figur 3 zeigt eine schematische Ansicht eines Wärmepumpenkreislaufs mit dem erfindungsgemäßen Wegeventil aus Figur 1 im Längsschnitt und in einer zweiten Betriebsstellung.

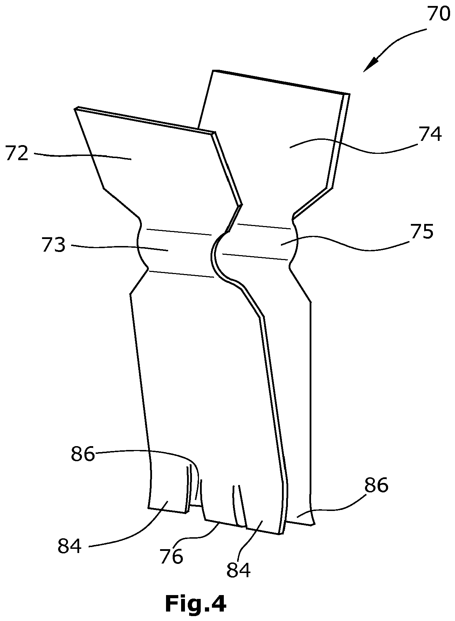

Figur 4 zeigt eine perspektivische Ansicht eines Betätigungsglieds des erfindungsgemäßen Wegeventil aus Figur 1.

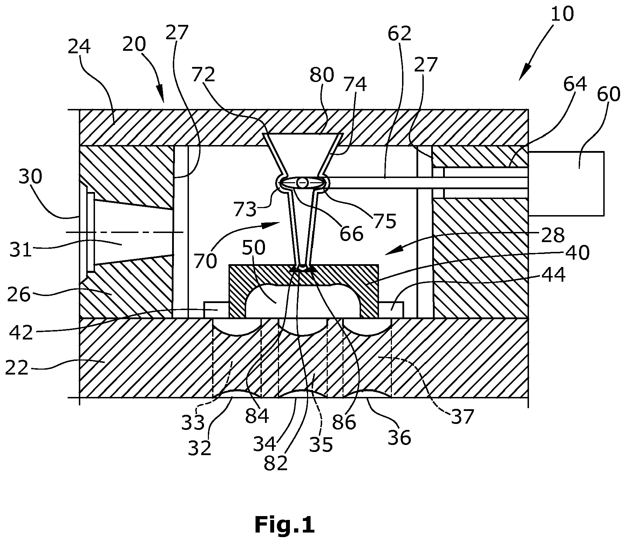

Die Figur 1 zeigt ein erfindungsgemäßes Wegeventil 10. Das Wegeventil 10 weist ein Ventilgehäuse 20 auf, welches mehrteilig ausgeführt ist. Das Ventilgehäuse 20 umfasst ein Bodenelement 22, ein Deckelelement 24 und ein zwischen dem Bodenelement 22 und dem Deckelelement 24 angeordnetes, hülsenartiges Mittelelement 26, wobei das Bodenelement 22, das Deckelelement 24 und das hülsenartiges Mittelteil 26 einen Fluidraum 28 begrenzen. Das hülsenartige Mittelteil 26 ist mit dem Bodenelement 22 und dem Deckelelement 24 über eine kraftschlüssige Verbindung, beispielsweise durch eine Schraubenverbindung, oder eine stoffschlüssige Verbindung, beispielsweise eine Schweißverbindung, fest verbunden.

Das hülsenartige Mittelelement 26 weist eine kegelförmige Durchgangsöffnung 31 auf, welche in den Fluidraum 28 mündet, wobei der Durchmesser der Durchgangsöffnung 31 ausgehend vom Fluidraum 28 stetig ansteigt. Die kegelförmige Durchgangsöffnung 31 bildet einen ersten fluidischen Anschluss 30. Das Bodenelement 22 umfasst einen zweiten fluidischen Anschluss 32, einen dritten fluidischen Anschluss 34 und einen vierten fluidischen Anschluss 36, wobei die fluidischen Anschlüsse 32, 34, 36 durch jeweils eine sich vom Fluidraum 28 und bis zur Außenfläche des Bodenelements 22 erstreckende Durchgangsöffnung 33, 35, 37 ausgeführt sind. Die Anschlüsse 32, 34, 36 sind in einer gemeinsamen Längsebene angeordnet.

In dem Fluidraum 28 ist ein Ventilglied 40 angeordnet. Das Ventilglied 40 ist in Längsrichtung des Ventilgehäuses 20 verschiebbar im Ventilgehäuse 20 gelagert. Das Ventilglied 24 liegt mit seiner zum Bodenelement 22 gerichteten Unterseite am Bodenelement 22 an und weist an seinen entgegengesetzten, zur Innenfläche 27 des Mittelteils 26 gerichteten Enden jeweils einen Vorsprung 42, 44 auf, wobei in Abhängigkeit von der Betriebsstellung des Ventilglieds 40 der eine Vorsprung 42 oder der andere Vorsprung 44 an der Innenfläche 27 des Mittelteils 26 anliegt.

Das Ventilglied 40 liegt quer zur Bewegungsrichtung des Ventilglieds 40, beispielsweise durch Vorsprünge, dauerhaft an der Innenfläche 27 des Mittelteils 26 an, wodurch das Ventilglied 40 während einer Verschiebung zwischen den beiden Betriebsstellungen geführt ist.

Das Ventilglied 40 weist an seiner dem Bodenelement 22 zugewandten Unterseite eine langgestreckte Öffnung 50 auf, welche eine derartige axiale Erstreckung aufweist, dass in den Betriebsstellungen des Ventilglieds 40 zwei der drei Anschlüsse 32, 34, 36 fluidisch miteinander verbunden sind. In einer ersten Betriebsstellung ist der zweite Anschluss 32 über die Öffnung 50 des Ventilglieds 40 mit dem dritten Anschluss 34 fluidisch verbunden. Gleichzeitig ist der erste Anschluss 30 über den Fluidraum 28 mit dem vierten Anschluss 36 fluidisch verbunden. In der zweiten Betriebsstellung ist der dritte Anschluss 34 über die Öffnung 50 des Ventilglieds 40 mit dem vierten Anschluss 36 fluidisch verbunden und der erste Anschluss 30 ist über den Fluidraum 28 mit dem zweiten Anschluss 32 fluidisch verbunden.

Zur Betätigung des Ventilglieds 40 ist ein erfindungsgemäßes Betätigungsglied 70 vorgesehen, welches kippbar am Ventilgehäuse 20 gelagert ist, wobei die Kippachse des Betätigungsglieds 70 senkrecht zur Bewegungsrichtung des Ventilglieds 40 angeordnet ist. Das Betätigungsglied 70 ist im Fluidraum 28 angeordnet und vollständig von dem durch den Fluidraum strömenden Fluid umgegeben, wodurch das Betätigungsglied 70 druckausgeglichen ist.

Das Betätigungsglied 70, welches in Figur 5 gezeigt ist, ist als V-förmige Blattfeder ausgeführt und weist einen ersten Schenkel 72, einen zweiten Schenkel 74 und einen die beiden Schenkel 72, 74 verbindenden Verbindungsabschnitt 76 auf. Die Schenkel 72, 74 des Betätigungsglieds 70 greifen mit ihren freien Enden in eine im Deckelelement 24 hergestellte Nut 80 ein, wobei die Nut 80 einen schwalbenschwanzartigen Querschnitt aufweist. Das Betätigungsglied 70 ist vorgespannt in der Nut 80 angeordnet. Das Betätigungsglied 70 greift mit dem Verbindungsabschnitt 76 in eine am Ventilglied 40 vorgesehene Nut 82 ein, welche sich quer zur Bewegungsrichtung des Ventilglieds 40 erstreckt. Die Nut 82 weist einen schwalbenschwanzartigen Querschnitt auf, wobei die Seitenflächen der Nut 82 ausgehend vom Nutgrund zulaufen. In die Hinterschnitte der schwalbenschwanzartigen Nut 82 greift jeweils eine im Bereich des Verbindungsabschnitts 76 angeordnete nach außen ragende Zungen 84, 86 ein, wodurch das Betätigungsglied 70 zuverlässig in der Nut 82 gehalten wird und eine zuverlässige Verbindung mit dem Ventilglied 40 sichergestellt wird.

Zur Verschiebung des Ventilglieds 40 ist ein mit dem Betätigungsglied 70 wirkverbundener Aktor 60 vorgesehen, welcher an der Außenfläche des Ventilgehäuses 20 angeordnet ist und als elektromagnetischer Aktor ausgeführt ist. Der Aktor 50 ist über ein Stangenelement 62 mit dem Betätigungsglied 70 verbunden, wobei das Stangenelement 62 durch eine im Mittelteil 26 vorgesehene, abgedichtete Durchgangsöffnung 64 in den Fluidraum 28 ragt und mit dem in den Fluidraum 28 ragenden axialen Ende mit dem Betätigungsglied 70 verbunden ist. Die Verbindung zwischen dem Stangenelement 62 und dem Betätigungsglied 70 erfolgt über ein Übertragungsglied 66, welches drehbar mit dem Stangenelement 62 verbunden ist und im Betätigungsglied 70 eingespannt ist. Für die Einspannung des Übertragungsglieds 66 weisen die Schenkel 72, 74 des Betätigungsglied 70 jeweils eine bezogen auf einen durch die V-förmige Blattfeder begrenzten Innenraum nach außen gerichtete Sicke 73, 75 auf, in welche das Übertragungsglied 66 endseitig eingreift.

Die Verschiebung des Ventilglieds 40 erfolgt durch die Betätigung des Aktors 60, wobei der Aktor 60 eine translatorische Bewegung des Stangenelements 62 bewirkt. Das Stangenelement 62 überträgt die Translationsbewegung über das Übertragungsglied 66 auf das Betätigungsglied 70. Durch die Hebelwirkung, welche daraus resultiert, dass der Angriffspunkt des Stangenelements 62 am Betätigungsglied 70 beabstandet von dem Ende, durch welches das Betätigungsglied 70 am Ventilgehäuse 20 gelagert ist, angeordnet ist, kippt das Betätigungsglied 70 und das über den Verbindungsabschnitt 76 mit dem Betätigungsglied verbundene Ventilglied 40 verschiebt sich translatorisch.

Durch den Unterschied zwischen dem auf die Außenfläche des Ventilglieds 40 wirkenden Druck im Fluidraum 28 und dem niedrigeren auf die Innenfläche wirkenden Druck in der Öffnung 50 sowie durch den Größenunterschied der druckbelasteten Flächen wird das Ventilglied 40 an das Bodenelement 22 gedrückt. Zusätzlich kann das als Blattfeder ausgeführte Betätigungsglied 70 in den beiden Betriebsstellungen derart elastisch verformt werden, dass das Ventilglied 40 durch das Betätigungselement 70 zusätzlich auf das Bodenelement 22 gedrückt wird. Dadurch wird die Dichtwirkung zwischen dem Ventilglied 40 und dem Bodenelement 22 erhöht.

In den Betriebsstellungen des Ventilglieds 40 liegt das Ventilglied 40 über den jeweiligen Vorsprung 42, 44 an dem Mittelteil 26 an, wodurch die druckbelastete Fläche des Ventilglieds 40 durch den anliegenden Vorsprung 42, 44 verkleinert wird. Dadurch wirkt eine resultierende Kraft auf das Ventilglied 40 in Richtung der Verschieberichtung und drückt das Ventilglied 40 über den Vorsprung 42, 44 gegen das Mittelteil 26. Dadurch kann die Schaltstellung gehalten werden, ohne dass der Aktor 60 aktiv ist.

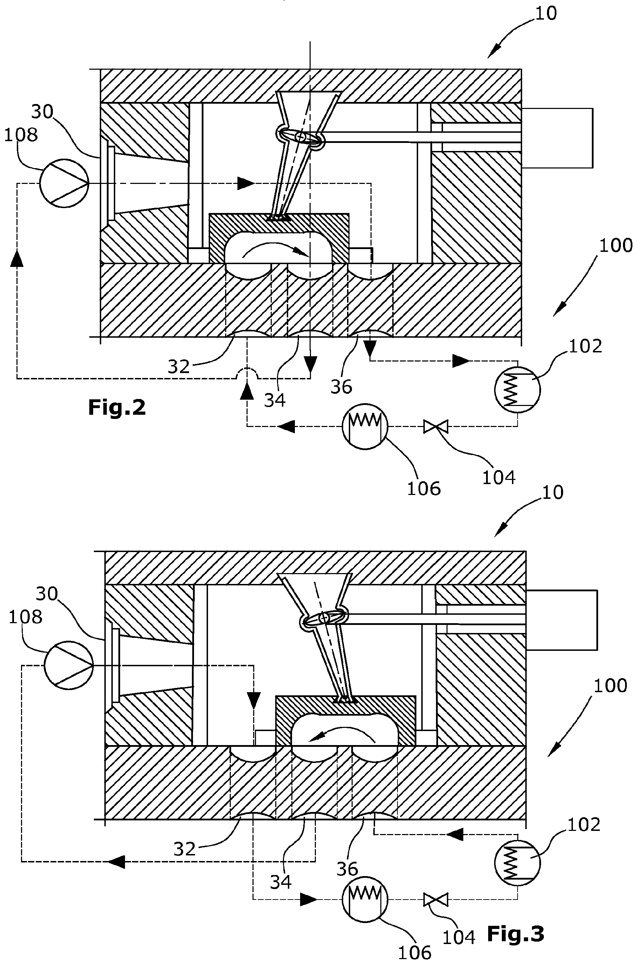

Die Figuren 2 und 3 zeigen die unterschiedlichen Betriebsstellungen des Wegeventils 10 in Kombination mit einem Wärmepumpenkreislauf 100, wobei der Wärmepumpenkreislauf 100 in Abhängigkeit von der Betriebsstellung als Heiz- oder als Kühlkreislauf genutzt wird. Figur 1 zeigt einen als Kühlkreislauf gezeigten Wärmepumpenkreislauf 100. Dabei ist das Ventilglied 40 des Wegeventils 10 in der ersten Betriebsstellung, wobei der erste Anschluss 30 über die Fluidkammer 28 mit dem vierten Anschluss 36 fluidisch verbunden ist und der zweite Anschluss 32 über das Ventilglied 40 mit dem dritten Anschluss 34 fluidisch verbunden ist. Das Kältemittel durchströmt ausgehend vom vierten Anschluss 36 einen ersten Wärmetauscher 102, ein Expansionsventil 104 und einen zweiten Wärmetauscher 106 und strömt abschließend in den zweiten Anschluss 32 des Wegeventils 10. Das Kältemittel wird über das Ventilglied 40 in den dritten Anschluss 34 umgeleitet und strömt ausgehend vom dritten Anschluss 34 zu einem Verdichter 106, wobei das Kältemittel ausgehend vom Verdichter wieder zum ersten Anschluss 30 strömt. Dieser Vorgang wiederholt sich dauerhaft bei einem aktiven Wärmepumpenkreislauf. Der zweite Wärmetauscher 106 ist derjenige Wärmetauscher, welcher aktiv zum Kühlen beispielsweise eines Fahrzeuginnenraums genutzt wird und mit dem Fahrzeuginnenraum thermisch verbunden ist, wobei das Kältemittel durch die vom Fahrzeuginnenraum über den zweiten Wärmetauscher 106 an das Kältemittel übertragene Wärme verdampft. Der erste Wärmetauscher 102 dient zum Abführen der Wärme aus dem Wärmepumpenkreislauf 100, wobei im ersten Wärmetauscher 102 die im Kältemittel gespeicherte Wärme abgeführt wird und das Kältemittel sich verflüssigt.

Figur 3 zeigt einen als Heizkreislauf genutzten Wärmepumpenkreislauf 100. Dabei wird die Strömungsrichtung des Kältemittels durch das Wegeventil 10 umgekehrt. Das Ventilglied 40 des Wegeventils 10 ist in der zweiten Betriebsstellung, wobei der erste Anschluss 30 über die Fluidkammer 28 mit dem zweiten Anschluss 32 fluidisch verbunden ist und der dritte Anschluss 34 über das Ventilglied 40 mit dem vierten Anschluss 36 fluidisch verbunden ist. Das Kältemittel durchströmt ausgehend vom zweiten Anschluss 32 den zweiten Wärmetauscher 106, das Expansionsventil 104 und den ersten Wärmetauscher 102 und strömt abschließend in den vierten Anschluss 36 des Wegeventils 10. Das Kältemittel wird über das Ventilglied 40 in den dritten Anschluss 34 umgeleitet und strömt ausgehend vom dritten Anschluss 34 zum Verdichter 106, wobei das Kältemittel ausgehend vom Verdichter wieder zum ersten Anschluss 30 strömt. Der erste Wärmetauscher 102 dient zum Aufnehmen der Wärme in den Wärmepumpenkreislauf 100, wobei das Kältemittel durch die zugeführte Wärme verdampft, im Verdichter 106 verdichtet wird und das verdichtete Kältemittel zum zweiten Wärmetauscher 106 strömt. Im zweiten Wärmetauscher 106 wird die im Kältemittel gespeicherte Wärme abgeführt und das Kältemittel verflüssigt sich. Die im zweiten Wärmetauscher 106 abgeführte Wärme wird zum Heizen des Fahrzeuginnenraums genutzt.

Es wird somit ein Wegeventil geschaffen, welches einfach und kostengünstig aufgebaut ist und unabhängig vom Betriebsdruck des Wärmepumpenkreislaufs schaltbar ist.

## Patentansprüche

1. Wegeventil für einen Wärmepumpenkreislauf mit
einem Ventilgehäuse (20), welches mindestens drei fluidische Anschlüsse (30, 32, 34, 36) aufweist und einen Fluidraum (28) begrenzt,
einem Ventilglied (40), welches in dem Ventilgehäuse (20) verschiebbar gelagert ist und zwischen mindestens zwei Betriebsstellungen verstellbar ist,
einem Aktor (60), über welchen das Ventilglied (40) translatorisch bewegbar ist,
**dadurch gekennzeichnet, dass**
der Aktor (60) über ein kippbares Betätigungsglied (70) mit dem Ventilglied (40) wirkverbunden ist, wobei die Kippachse des Betätigungsglieds (70) senkrecht zur Bewegungsrichtung des Ventilglieds (40) angeordnet ist, wobei das Betätigungsglied (70) eine Blattfeder mit einem V-förmigen Querschnitt ist, wobei die V-förmige Blattfeder zwei Schenkel (72, 74) und einen die beiden Schenkel (72, 74) verbindenden Verbindungsabschnitt (76) aufweist, wobei die Blattfeder über die freien Enden der Schenkel (72, 74) kippbar am Ventilgehäuse (20) gelagert ist und über den Verbindungsabschnitt (76) zumindest in Bewegungsrichtung des Ventilglieds (40) formschlüssig mit dem Ventilglied (40) verbunden ist.

2. Wegeventil nach Anspruch 1,
**dadurch gekennzeichnet, dass**
das Betätigungsglied (70) druckausgeglichen ist.

3. Wegeventil nach Anspruch 1 oder 2,
**dadurch gekennzeichnet, dass**
das Betätigungsglied (70) mit einem ersten Ende kippbar am Ventilgehäuse (20) gelagert ist und mit einem zweiten Ende mit dem Ventilglied (40) wirkverbunden ist, wobei das Betätigungsglied (70) über einen zum ersten Ende des Betätigungsglieds (70) beabstandeten Angriffspunkt mit dem Aktor (60) gekoppelt ist.

4. Wegeventil nach Anspruch 1,
**dadurch gekennzeichnet, dass**
die Schenkel (72, 74) der V-förmigen Blattfeder jeweils eine bezogen auf einen durch die V-förmige Blattfeder begrenzten Innenraum nach außen gerichtete Sicke (73, 75) aufweisen, wobei in die Sicken (73, 75) ein mit dem Aktor (60) wirkverbundenes Übertragungsglied (66) eingreift.

5. Wegeventil nach einem der vorhergehenden Ansprüche,
**dadurch gekennzeichnet, dass**
das Ventilglied (40) an seiner dem Betätigungsglied (70) zugewandten Oberfläche eine Nut (82) aufweist, in die der Verbindungsabschnitt (76) des Betätigungsglieds (70) eingreift.

6. Wegeventil nach Anspruch 5,
**dadurch gekennzeichnet, dass**
die Nut (82) zwei gegenüberliegende, ausgehend vom Nutgrund aufeinander zulaufende Seitenflächen aufweist.

7. Wegeventil nach Anspruch 5,
**dadurch gekennzeichnet, dass**
das Betätigungsglied (70) eine von der Außenfläche ragenden Zunge (84, 86) aufweist, welche in die durch die zulaufenden Seitenflächen der Nut (82) hergestellten Hinterschnitt eingreift.

8. Wegeventil nach einem der vorhergehenden Ansprüche,
**dadurch gekennzeichnet, dass**
das Ventilglied (40) einen ersten Vorsprung (42) und einen zweiten Vorsprung (44) aufweist, wobei das Ventilglied (40) in einer der beiden Betriebsstellungen mit dem ersten Vorsprung (42) und in der anderen Betriebsstellung mit dem zweiten Vorsprung (44) am Ventilgehäuse (20) anliegt.

9. Wegeventil nach einem der vorhergehenden Ansprüche,
**dadurch gekennzeichnet, dass**
das Ventilgehäuse (20) mehrteilig aus einem Bodenelement (22), einem hülsenartigen Mittelelement (26) und einem Deckelelement (24) ausgeführt ist.

10. Wegeventil nach Anspruch 9,
**dadurch gekennzeichnet, dass**
vier Anschlüsse (30, 32, 34, 36) vorgesehen sind, wobei drei Anschlüsse (32, 34, 36) am Bodenelement (22) angeordnet sind und ein Anschluss (30) am Mittelelement (26) angeordnet ist.

11. Wegeventil nach einem der vorhergehenden Ansprüche,
**dadurch gekennzeichnet, dass**
der Aktor (60) ein elektromagnetischer Aktor ist.

12. Wegeventil nach Anspruch 11,
**dadurch gekennzeichnet, dass**
der elektromagnetische Aktor (60) über ein Stangenelement (62) mit dem Übertragungsglied (66) drehbar verbunden ist, wobei das Stangenelement (62) translatorisch in Bewegungsrichtung des Ventilglieds (40) durch den Aktor (60) verschiebbar ist.

## Claims

1. Way valve for a heat pump circuit with
a valve housing (20), which has at least three fluidic connections (30, 32, 34, 36) and defines a fluid space (28)
a valve member (40), which is displaceably mounted in the valve housing (20) and is displaceable between at least two operating positions,
an actuator (60) by which the valve member (40) is translationally movable,
wherein the actuator (60) is operatively connected to the valve member (40) via a tiltable actuating member (70), wherein the tilting axis of the actuating member (70) is arranged perpendicular to the direction of movement of the valve member (40), wherein the actuating member (70) is a leaf spring with a V-shaped cross-section, wherein the V-shaped leaf spring has two legs (72, 74) and a connecting section (76) connecting the two legs (72, 74), wherein the leaf spring is tiltably mounted on the valve housing (20) via the free ends of the legs (72, 74) and is interlockingly connected to the valve member (40) via the connecting section (76) at least in the direction of movement of the valve member (40).

2. Way valve according to claim 1,
wherein the actuating member (70) is pressure balanced.

3. Way valve according to claim 1 or 2,
wherein the actuating member (70) is tiltably mounted to the valve housing (20) at a first end and is operatively connected to the valve member (40) at a second end, wherein the actuating member (70) is coupled to the actuator (60) via an engagement point spaced apart from the first end of the actuating member (70).

4. The way valve of claim 1,
wherein the legs (72, 74) of the V-shaped leaf spring each comprise a corrugation (73, 75) directed outwardly with respect to an interior space defined by the V-shaped leaf spring, the corrugations (73, 75) being interacted with by a transmission member (66) operatively connected to the actuator (60).

5. Way valve according to one of the preceding claims, wherein the valve member (40) comprises on its surface facing the actuating member (70) a groove (82) into which the connecting section (76) of the actuating member (70) interacts.

6. Way valve according to claim 5,
wherein the groove (82) comprises two opposite side surfaces converging towards each other starting from the groove bottom.

7. The way valve of claim 6,
wherein the actuating member (70) comprises a tongue (84, 86) projecting from the outer surface and interacting with the undercut produced by the tapered side surfaces of the groove (82).

8. Way valve according to one of the preceding claims,
wherein the valve member (40) comprises a first protrusion (42) and a second protrusion (44), wherein the valve member (40) is in contact with the valve housing (20) with the first protrusion (42) in one of the two operating positions and with the second protrusion (44) in the other operating position.

9. Way valve according to one of the preceding claims,
wherein the valve housing (20) is configured in multiple parts comprising a bottom element (22), a sleeve-like center element (26) and a cover element (24).

10. The way valve of claim 9,
wherein four connections (30, 32, 34, 36) are provided, wherein three connections (32, 34, 36) are arranged at the bottom element (22) and one connection (30) is arranged at the center element (26).

11. Way valve according to one of the preceding claims,
wherein the actuator (60) is an electromagnetic actuator.

12. Way valve according to claim 11,
wherein the electromagnetic actuator (60) is rotatably connected to the transmission member (66) via a rod member (62), the rod member (62) being translationally displaceable in the direction of movement of the valve member (40) by the actuator (60).

## Revendications

1. Vanne directionnelle pour un circuit de thermopompe avec
un boîtier de vanne (20) qui comprend au moins trois connexions fluidiques (30, 32, 34, 36) et qui délimite une chambre de fluide (28),
un élément de soupape (40) qui est logé de manière coulissante dans le boîtier de vanne (20) et qui peut être réglé entre au moins deux positions de fonctionnement,
un actionneur (60) par l'intermédiaire duquel l'élément de soupape (40) peut être déplacé en translation,
**caractérisé en ce que**
l'actionneur (60) est en liaison active avec l'élément de soupape (40) par l'intermédiaire d'un élément d'actionnement basculant (70), l'axe de basculement de l'élément d'actionnement (70) étant disposé perpendiculairement à la direction de déplacement de l'élément de soupape (40), l'élément d'actionnement (70) étant un ressort à lame avec une section transversale en forme de V, le ressort à lame en forme de V ayant deux branches (72, 74) et un tronçon de liaison (76) reliant les deux branches (72, 74), le ressort à lame étant monté basculant sur le boîtier de vanne (20) par l'intermédiaire des extrémités libres des branches (72, 74) et étant relié par complémentarité de forme à l'organe de vanne (40) par l'intermédiaire du tronçon de liaison (76) au moins dans la direction de déplacement de l'organe de vanne (40).

2. Vanne directionnelle selon la revendication 1,
**caractérisé en ce que**
l'organe de commande (70) est équilibré en pression.

3. Vanne directionnelle selon la revendication 1 ou 2,
**caractérisé en ce que**
l'organe d'actionnement (70) est monté basculant sur le boîtier de vanne (20) par une première extrémité et est en liaison active avec l'organe de vanne (40) par une deuxième extrémité, l'organe d'actionnement (70) étant couplé à l'actionneur (60) par un point d'attaque situé à distance de la première extrémité de l'organe d'actionnement (70).

4. Vanne directionnelle selon la revendication 1,
**caractérisé en ce que**
les branches (72, 74) du ressort à lame en forme de V comprennent chacune une moulure (73, 75) orientée vers l'extérieur par rapport à un espace intérieur délimité par le ressort à lame en forme de V, un organe de transmission (66) en liaison fonctionnelle avec l'actionneur (60) s'engageant dans les moulures (73, 75).

5. Vanne directionnelle selon l'une des revendications précédentes,
**caractérisé en ce que**
l'organe de vanne (40) comprend, sur sa surface orientée vers l'organe d'actionnement (70), une rainure (82) dans laquelle s'engage la portion de liaison (76) de l'organe d'actionnement (70).

6. Vanne directionnelle selon la revendication 5,
**caractérisé en ce que**
la rainure (82) comprend deux surfaces latérales opposées convergeant l'une vers l'autre à partir du fond de la rainure.

7. Vanne directionnelle selon la revendication 6,
**caractérisé en ce que**
l'organe de commande (70) comprend une languette (84, 86) faisant saillie de la surface extérieure et s'engageant dans la contre-dépouille réalisée par les faces latérales coniques de la rainure (82).

8. Vanne directionnelle selon l'une des revendications précédentes,
**caractérisé en ce que**
l'organe de distribution (40) comprend une première projection (42) et une deuxième projection (44), l'organe de distribution (40) étant en appui sur le boîtier de vanne (20) par la première projection (42) dans l'une des deux positions de fonctionnement et par la deuxième projection (44) dans l'autre position de fonctionnement.

9. Vanne directionnelle selon l'une des revendications précédentes,
**caractérisé en ce que**
le boîtier de vanne (20) est réalisé en plusieurs parties à partir d'un élément de fond (22), d'un élément central (26) en forme de manchon et d'un élément de couvercle (24).

10. Vanne directionnelle selon la revendication 9,
**caractérisé en ce que**
quatre connexions (30, 32, 34, 36) sont prévues, trois connexions (32, 34, 36) étant disposées sur l'élément de fond (22) et une connexion (30) étant disposée sur l'élément central (26).

11. Vanne directionnelle selon l'une des revendications précédentes,
**caractérisé en ce que**
l'actionneur (60) est un actionneur électromagnétique.

12. Vanne directionnelle selon la revendication 11,
**caractérisé en ce que**
l'actionneur électromagnétique (60) est relié en rotation à l'organe de transmission (66) par un élément de tige (62), l'élément de tige (62) pouvant être déplacé en translation dans le sens de déplacement de l'organe de distribution (40) par l'actionneur (60).
